# EUROPÄISCHE PATENTSCHRIFT

(11) **EP 2 185 448 B1**
(45) Veröffentlichungstag und Bekanntmachung des Hinweises auf die Patenterteilung: **27.11.2013**
(21) Anmeldenummer: 08786550.7
(22) Anmeldetag: 29.07.2008
(51) Int. Cl.: B65G 47/08, B65G 47/244

(54) **VORRICHTUNG ZUM TRANSPORTIEREN VON GEBINDEN**
APPARATUS FOR CONVEYING PACKAGES
ENSEMBLE DE TRANSPORT DE FUTS

(30) Priorität: 07.08.2007 DE 102007037250
(43) Veröffentlichungstag der Anmeldung: 19.05.2010
(73) Patentinhaber: Krones AG, 93073 Neutraubling (DE)
(72) Erfinder: KÄS, Roland, 93098 Moosham (DE); OBERPRILLER, Walter, 93176 Beratshausen/Oberpfraundorf (DE)
(74) Vertreter: Bittner, Bernhard
(86) Internationale Anmeldenummer: PCT/EP2008/059912
(87) Internationale Veröffentlichungsnummer: WO 2009/019164

(56) Entgegenhaltungen:
- EP-A- 1 046 598
- EP-A- 1 693 300
- EP-A- 1 767 474

## Beschreibung

Die vorliegende Erfindung bezieht sich auf eine Vorrichtung zum Transportieren von Gebinden. Im Bereich der Verpackungsindustrie ist es üblich, beispielsweise eine Vielzahl von Behältnissen zu Gebinden zusammenzustellen und eine Vielzahl derartiger Gebinde wiederum in mehreren Lagen zu palettieren. Um eine derartige Vielzahl unterschiedlicher Lagen übereinanderstapeln zu können, ist es üblich, die einzelnen Gebinde, die beispielsweise einen rechteckigen Querschnitt haben, versetzt zueinander anzuordnen, um auf diese Weise das Entstehen von Lücken, die sich über die gesamte Höhe eines Stapels hinwegziehen, zu vermeiden.

Aus der EP 1 693 300 A1 ist eine Verpackungsanlage bekannt. Diese Verpackungsanlage weist mehrere Funktionseinheiten wie beispielsweise Schrumpftunnel, Kühlstrecken oder Gruppierungseinrichtungen auf.

Die EP 1767 474 A2 beschreibt eine Vorrichtung zum Handhaben von Gegenständen wie Kartons. Diese Vorrichtung weist eine Greifereinrichtung mit wenigstens einem Greifer Handhaben der Gegenstände auf.

Bei der Herstellung derartiger Gebinde werden immer höhere Arbeitsgeschwindigkeiten angestrebt. Bei der Herstellung derartiger Gebindelagen ist es teilweise erforderlich, einzelne Gebinde gegenüber einer Transportstrecke zu drehen. Zu diesem Zweck werden beispielsweise Dreheinrichtungen verwendet, welche die Gebinde an einen bestimmten Punkt angreifen und auf diese Weise eine Drehung des Gebindes bewirken. Derartige Anlagen sind jedoch in ihrer Transport-und damit auch in ihrer Verpackungsgeschwindigkeit begrenzt.

Der vorliegenden Erfindung liegt daher die Aufgabe zugrunde, eine Vorrichtung zum Transportieren von Gebinden zur Verfügung zu stellen, welche eine höhere Arbeitsgeschwindigkeit erlaubt. Dies wird erfindungsgemäß durch eine Vorrichtung nach Anspruch 1, eine Anlage nach Anspruch 7 und ein Verfahren nach Anspruch 14 erreicht. Vorteilhafte Ausführungsformen und Weiterbildungen sind Gegenstand der Unteransprüche.

Eine erfindungsgemäße Vorrichtung zum Transportieren von Gebinden weist eine erste Transporteinrichtung auf, welche die Gebinde in einer vorgegebenen Transportrichtung fördert. Weiterhin ist eine Dreheinrichtung vorgesehen, welche wenigstens einige der Gebinde bezüglich einer vorgegebenen Drehachse um einen vorgegebenen Winkel dreht. Dabei weist diese Dreheinrichtung wenigstens eine Greifeinrichtung auf, welche die Gebinde für den Drehvorgang greift, wobei die Greifeinrichtung in der Transportrichtung bewegbar ist. Erfindungsgemäß ist die Transportgeschwindigkeit der ersten Transporteinrichtung mit einer Bewegungsgeschwindigkeit der Greifeinrichtung synchronisiert.

Die Dreheinrichtung dreht die Gebinde bevorzugt gegenüber der Transporteinrichtung, bei der es sich beispielsweise um ein Transportband handelt. Unter einer Greifeinrichtung wird ein Element verstanden, welches die zu greifenden Gebinde an wenigstens einer Seitenfläche bevorzugt jedoch an wenigstens zwei Seitenflächen kontaktiert. Durch die Synchronisierung der Transportgeschwindigkeit mit der Bewegungsgeschwindigkeit der Greifeinrichtung ist es möglich, die Transportgeschwindigkeit insgesamt zu erhöhen. Genauer gesagt führt die Dreheinrichtung eine genau definierte Drehung beispielsweise eine Drehung des Gebindes um 90° durch und wird während des Durchführens dieser Drehbewegung zumindest auch in Transportrichtung bewegt wobei insbesondere diese Bewegung in der Transportrichtung wenigstens zeitweise mit der Transportgeschwindigkeit der Transporteinrichtung in der Transportrichtung synchronisiert ist.

Genauer gesagt bewegt sich die Greifeinrichtung wenigstens zeitweise in der Transportrichtung und während dieses Zeitraums insbesondere auch oberhalb der Transporteinrichtung wobei die Bewegungsgeschwindigkeit der Greifeinrichtung in der Transportrichtung in diesem Zeitraum mit der Transportgeschwindigkeit der Transporteinrichtung übereinstimmt.

Bevorzugt ist eine Vielzahl von Greifeinrichtungen vorgesehen, wobei diese Greifeinrichtungen wenigstens zeitweise in der Transportrichtung bewegt werden. Bei einer weiteren vorteilhaften Ausführungsform werden die Greifeinrichtungen wenigstens zeitweise auch in einer zur Transportrichtung senkrecht stehenden Richtung und besonders bevorzugt in einer zu der Ebene des Transportbands senkrecht stehenden Richtung bewegt. Vorteilhaft werden die Greifeinrichtungen entlang einer Kreisbahn bewegt. Bevorzugt ist die Greifeinrichtung bzw. sind mehrere Greifeinrichtungen drehbar um eine vorgegebene Achse angeordnet. Dabei handelt es sich insbesondere um eine Achse, welche oberhalb der Transporteinrichtung angeordnet ist, wobei diese Achse besonders bevorzugt ebenfalls senkrecht zu der Transportrichtung steht. Bei einer vorteilhaften Ausführungsform ist eine Vielzahl von Greifeinrichtungen drehbar um diese erwähnte vorgegebene Achse angeordnet.

Vorzugsweise ist die Greifeinrichtung derart gestaltet, dass sie das Gebinde im Wesentlichen formschlüssig greift. Dabei können beispielsweise zwei sich gegenüberliegende Platten als Greifelemente vorgesehen sein, die einen Abstand voneinander aufweisen, der geringfügig größer als die Längsrichtung (oder auch größer als die Querrichtung, falls das Gebinde entlang seiner Längsrichtung gegriffen wird) der Gebinde ist. Auf diese Weise kann das Gebinde mit der Greifeinrichtung sehr genau bzw. mit einer hohen Winkelgenauigkeit gedreht werden. Vorzugsweise ist eine Vielzahl von Greifeinrichtungen vorgesehen, die um die oben erwähnte vorgegebene Achse drehbar sind wobei jede einzelne Greifeinrichtung zur Erzeugung der Drehung der Gebinde zusätzlich um eine weitere Achse drehbar ist, welche nicht parallel zu der oben erwähnten vorgegebenen Achse und bevorzugt senkrecht hierzu ist.

Vorzugsweise ist die weitere Drehachse, um die die einzelnen Greifeinrichtungen drehbar sind, zwischen den beiden Platten angeordnet. Vorzugsweise ist in der Transportrichtung vor der Dreheinrichtung eine Sensoreinrichtung wie eine Lichtschranke angeordnet, welche das Vorhandensein eines Gebindes erkennt. Dabei ist zu berücksichtigen, dass die Gebinde teilweise nicht in regelmäßigen Zeitabständen an der Transporteinrichtung ankommen sondern unregelmäßig. Weiterhin ist eine Steuereinrichtung vorgesehen, welche in Reaktion auf ein Signal der Sensoreinrichtung den Drehvorgang der Gebinde einleitet bzw. die Geschwindigkeit der Greifeinrichtungen mit der Geschwindigkeit der Transporteinrichtung synchronisiert.

Die vorliegende Erfindung ist weiterhin auf eine Anlage zum Transportieren von Gebinden mit einer Vorrichtung der oben beschriebenen Art gerichtet, wobei diese Anlage in der Transportrichtung vor der Drehrichtung ein Transportband aufweist, welches vorgegebene Abstände zwischen einzelnen Gebinden erzeugt. Unter einer Transportrichtung wird dabei diejenige Richtung verstanden, entlang derer die Gebinde transportiert werden. Dabei kommen die einzelnen Gebinde üblicherweise ohne Abstände zueinander an. Das Transportband bewirkt, dass zwischen den einzelnen Gebinden Abstände erzeugt werden, die wiederum ein Ergreifen der Gebinde durch die Greifeinrichtungen ermöglichen.

In einer weiteren vorteilhaften Ausführungsform weist die Anlage eine Schiebeeinrichtung auf, die eine Vielzahl von Gebinden in einer von der Transportrichtung abweichenden Richtung schiebt. So werden beispielsweise mehrere Gruppen bzw. Reihen von Gebinden erzeugt, wobei innerhalb dieser Gruppen bzw. Reihen einige Gebinde gedreht sind und andere nicht. Die Schiebeeinrichtung schiebt diese einzelnen Reihen wiederum in einer anderen Richtung zusammen um auf diese Weise eine Palettierung zu ermöglichen. Vorzugsweise ist die abweichende Richtung im Wesentlichen senkrecht zu der Transportrichtung.

Vorzugsweise ist in der Transportrichtung nach der ersten Transporteinrichtung eine weitere Transporteinrichtung vorgesehen, welche die Gebinde nach bzw. stromabwärts bezüglich der ersten Transporteinrichtung fördert. Dabei fördert vorzugsweise diese weitere Transporteinrichtung die Gebinde in der Transportrichtung. Vorteilhaft ist eine Verzögerungsseinrichtung bzw. Vorbahn daher zwischen der Schiebeeinrichtung und der ersten Transporteinrichtung vorgesehen. Vorteilhaft handelt es sich hierbei um eine Vorbahn, die zum Geschwindigkeitsabbau der während des Drehvorgangs entstandenen Geschwindigkeit dient. Die Verzögerungseinrichtung bewegt die Gebinde ebenfalls in der Transportrichtung.

Diese nachgeschaltete Vorbahn soll die hohe Geschwindigkeit des Drehvorgangs abbauen bzw. reduzieren. Bei einer niedrigen Gesamtleistung oder Gesamttransportgeschwindigkeit der Analage ist es auch möglich, dass die erwähnte Vorbahn entfällt.

Weiterhin ist vorzugsweise nach der Vorbahn die im folgenden auch als Einlaufbahn bezeichnete weitere Transporteinrichtung für die Gebinde vorgesehen, der gegenüber die Verschiebeeinrichtung bewegt werden kann. Dabei ist auf dieser Einlaufbahn vorzugsweise eine Geschwindigkeitsregelung vorgesehen, welche eine lagebildabhängige Positionierung der Gebinde erlaubt. Vorzugsweise ist diese Einlaufbahn nicht mit der ersten Transporteinrichtung synchronisiert, sondern der Drehvorgang (der zur Lagenvorbereitung dient) und die Reihenvorbereitung durch die Einlaufbahn sind voneinander entkoppelt. Falls beispielsweise bei der Einlaufbahn bzw. dem Gruppierband eine Störung auftritt, kann die Lagenvorbereitung gestoppt und der Vorgang durch die oben erwähnte Vorbahn getrennt werden. Vorzugsweise werden durch die oben erwähnte Vorbahn die vor dem Drehvorgang erzeugten Lücken zwischen den einzelnen Gebinden zumindest teilweise wieder geschlossen.

In einer weiteren vorteilhaften Ausführungsform ist an der Transporteinrichtung stromaufwärts bezüglich der Dreheinrichtung eine weitere Verschiebeeinrichtung vorgesehen, welche einzelne Gebinde in einer von der Transportrichtung abweichenden Richtung verschiebt. Vorzugsweise verschiebt diese weitere Verschiebeinrichtung einzelne Gebinde senkrecht zur Transportrichtung. Auf diese Weise ist es möglich, die Gebinde in zwei nebeneinanderliegenden Bahnen anzuordnen. Besonders bevorzugt ist jedoch nur eine Dreheinrichtung vorgesehen, welche die Gebinde auf nur einer dieser beiden Bahnen dreht. Besonders vorteilhaft werden die von der weiteren Verschiebeeinrichtung verschobenen Gebinde nicht gedreht, sodass eine Gruppe bzw. Reihe mit unverdrehten Gebinden entsteht. Auf diese Weise kann die Geschwindigkeit der gesamten Anlage erhöht werden, da beispielsweise eine Reihe mit unverdrehten Gebinden gemeinsam mit einer weiteren Reihe, welche teilweise gedrehte Gebinde aufweist, gemeinsam zusammengestellt werden kann.

Vorzugsweise ist die Transporteinrichtung derart gestaltet, dass in einer zu der Transporteinrichtung senkrecht stehenden Richtung zwei Gebinde nebeneinander transportiert werden können. Auch auf diese Weise ist eine Erhöhung des Durchsatzes möglich. Bei einer weiteren vorteilhaften Ausführungsform weist die Anlage wenigstens zwei in einer zur Transportrichtung senkrecht stehenden Richtung nebeneinander angeordnete Dreheinrichtungen auf. Dabei werden bevorzugt die von diesen Dreheinrichtungen durchgeführten Drehbewegungen mit einer Steuereinrichtung gesteuert, sodass die Gebinde in einer gewünschten Abfolge zueinander angeordnet werden können. Auch wäre es möglich, mehr als zwei Dreheinrichtungen nebeneinander vorzusehen. Wenn sich beispielsweise eine Lage an Gebinden aus n Gebindereihen zusammensetzt, könnten bis zu n Dreheinrichtungen vorgesehen sein. Bei einer bevorzugten Ausführungsform wäre es auch möglich, für die Erstellung von n Gebindereihen n/2 Dreheinrichtungen vorzusehen.

Die vorliegende Erfindung bezieht sich weiterhin auf ein Verfahren zum Transportieren von Gebinden, wobei die bzw. einzelne dieser Gebinde mittels einer ersten Transporteinrichtung in einer vorgegebenen Transportrichtung transportiert und mittels einer Dreheinrichtung um eine vorgegebenen Drehachse gedreht werden, wobei die Gebinde während des Transports mit der ersten Transporteinrichtung gedreht werden. Erfindungsgemäß werden die Gebinde zur Durchführung des Drehvorgangs mit sich bewegenden Greifeinrichtungen erfasst, wobei die Bewegungen dieser Greifeinrichtungen mit der Bewegung der Transporteinrichtung synchronisiert sind. Vorteilhaft verläuft die Drehachse, um die die Gebinde gedreht werden senkrecht zu der Transporteinrichtung und besonders bevorzugt innerhalb der Gebinde. Idealerweise verläuft die Drehachse durch den Schwerpunkt der einzelnen Gebinde. Auf diese Weise ist eine sehr schnelle Drehung der Gebinde ohne das Entstehen von Unwuchten möglich.

Vorteilhaft werden die Gebinde mit der Greifeinrichtung im Wesentlichen formschlüssig gegriffen. Auf diese Weise ist, wie oben erwähnt, eine sehr exakte Drehung der einzelnen Gebinde auch bei hoher Transportgeschwindigkeit möglich.

Weitere vorteilhafte Ausführungsformen ergeben sich aus den beigefügten Zeichnungen:
Darin zeigen:
   - Fig. 1: eine erfindungsgemäße Anlage zum Transportieren von Gebinden in einer ersten Ausführungsform;
   - Fig. 2: eine erfindungsgemäße Anlage zum Transportieren von Gebinden in einer zweiten Ausführungsform;
   - Fig. 3: eine erfindungsgemäße Anlage zum Transportieren von Gebinden in einer dritten Ausführungsform; und
   - Fig. 4: eine erfindungsgemäße Anlage zum Transportieren von Gebinden in einer vierten Ausführungsform.

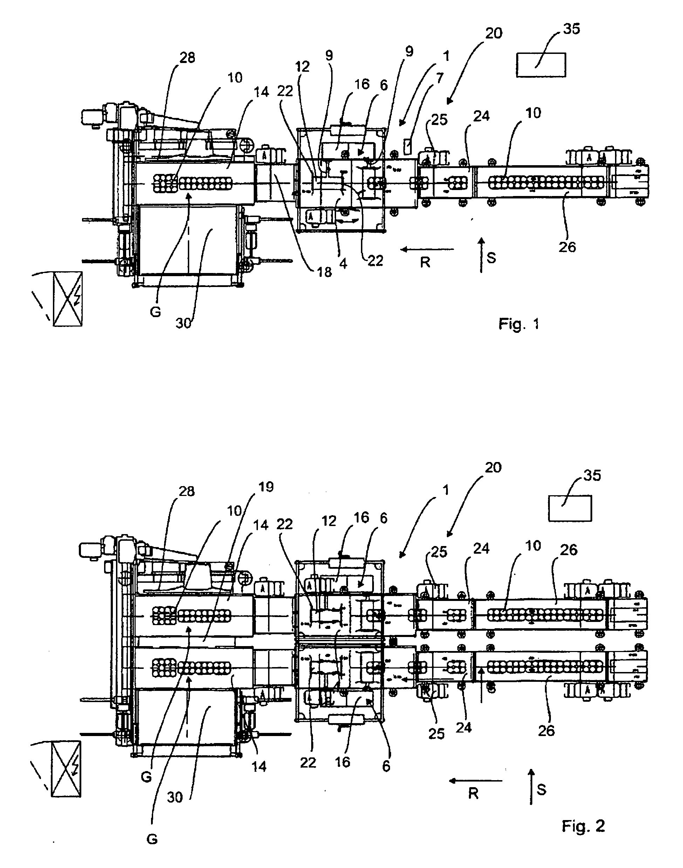

Fig. 1 zeigt eine erfindungsgemäße Anlage 20 zum Transportieren von Gebinden in einer ersten Ausführungsform. Dabei werden die Gebinde 10 bei denen es sich beispielsweise um Zusammenstellungen von mehreren Flaschen handeln kann, über ein Transportband 26, bei dem es sich beispielsweise um ein Stoppband handeln kann, zugeführt. Diesem Stoppband 26 kann beispielsweise eine Steuerstrecke und/oder ein Schrumpftunnel (nicht gezeigt) vorgeschaltet sein, der aus einer Vielzahl von Einzelbehältnissen die Gebinde 10 erzeugt.

An dieses Stoppband 26 schließt sich ein Trennband 24 an, welches bewirkt, dass zwischen einzelnen Gebinden 10 eine Lücke erzeugt wird, die hilfreich ist, um den im folgenden zu beschreibenden Drehvorgang zu erzeugen. An das Trennband 24 schließt sich eine erste Transporteinrichtung 4 an, die wie unten genauer erläutert wird, zur Erreichung des Drehvorganges für die Gebinde 10 dient. Das Bezugszeichen 1 bezeichnet in seiner Gesamtheit die erfindungsgemäße Vorrichtung zum Transportieren von Gebinden 10.

In anderen Ausführungsformen wäre es auch möglich, auf das Trennband 24 zu verzichten und die Transporteinrichtung direkt stromabwärts bezüglich des Stoppbands 26 anzuordnen. Das Bezugszeichen 25 kennzeichnet einen Antrieb für das Trennband 24.

Das Stoppband 26 läuft bevorzugt mit einer geringeren Geschwindigkeit als das Trennband. Beispielsweise kann die Geschwindigkeit des Stoppbandes zwischen 0,1 m/sek und 0,3 m/sek und bevorzugt 0,2 m/sek betragen und die Geschwindigkeit des Trennbandes zwischen 0,4 m/sek und 0,8m/sek und bevorzugt 0,6 m/sek, um auf diese Weise die nötigen Lücken zu erzeugen. Bei der Transporteinrichtung 4 handelt es sich in dieser Ausführungsform um einen einspurigen Mattenkettenförderer, der vorteilhaft gegenüber dem Trennband noch schneller läuft, beispielsweise mit einer Geschwindigkeit von ca. 1,0 m/sek. Damit dient bei der in Fig. 1 gezeigten Ausführungsform das Trennband auch 24 dazu, um die Gebinde zu beschleunigen.

Das Bezugzeichen 6 bezieht sich in seiner Gesamtheit auf eine Dreheinrichtung, mit der einzelne Gebinde um einen vorgegebenen Winkel, insbesondere um 90°, gedreht werden. Ein derartig gedrehtes Gebinde ist in Fig. 1 im linken Teil gezeigt. Dabei sind Drehungen in und entgegen dem Uhrzeigersinn möglich, sowie auch Drehungen um 180°, um beispielsweise Etiketten auszurichten.

Die Dreheinrichtung 6 weist eine Vielzahl von Greifeinrichtungen 12 auf, die drehbar um Achsen 9 angeordnet sind, wobei diese Achsen 9 sich in Fig. 1 in der Richtung S erstrecken und oberhalb der Transporteinrichtung 4 angeordnet sind. Das Bezugszeichen 16 bezieht sich dabei auf einen Antrieb, der die Drehbewegung der Greifeinrichtungen 12 um die oberhalb der Transporteinrichtung 4 angeordnete Achse 9 bewirkt. Dabei ist bevorzugt eine Vielzahl dieser Achsen 9 wiederum drehbar um eine zentrale Achse (nicht gezeigt) angeordnet. Diese zentrale Achse verläuft dabei vorteilhaft parallel zu den einzelnen Achsen 9.

Die Drehung dieser Achsen 9 um die zentrale Achse kann dabei mit einer konstanten Winkelgeschwindigkeit erfolgen, es wäre jedoch auch möglich, dass diese Drehgeschwindigkeit derart angepasst ist, dass sich die einzelnen Greifeinrichtungen 12 über eine möglichst lange Strecke hinweg im wesentlichen mit der Transportgeschwindigkeit der ersten Transporteinrichtung 4 bewegen. Hierzu wäre es beispielsweise denkbar, die Drehgeschwindigkeit auch von der Drehstellung der einzelnen Greifeinrichtungen 12 bezüglich der zentralen Achse abhängig zu gestalten. Mathematisch wäre dies beispielsweise durch die Verwendung von trigonometrischen Funktionen zur Beschreibung des Zusammenhangs zwischen der Transportgeschwindigkeit der Transporteinrichtung 4 und der Drehgeschwindigkeit der einzelnen Greifeinrichtungen 12 um die zentrale Achse durchführbar. Bevorzugt ist die Drehbewegung um die zentrale Achse mit den Drehbewegungen um die Achsen 9 mechanisch gekoppelt, so dass die Drehstellung der Greifeinrichtung bezüglich des Transportbandes konstant bleibt.

Das Bezugszeichen R bezieht sich auf die Transportrichtung, mit der die Gebinde 10 entlang der Anlage 20 gefördert werden. Das Bezugszeichen 22 kennzeichnet Greifelemente, die zum Greifen der einzelnen Gebinde vorgesehen sind. Dabei handelt es sich bei der in Fig. 1 gezeigten Ausführungsform um zwei sich gegenüberstehende Platten 22, die einen Abstand aufweisen, der nur geringfügig größer ist als die Länge der Gebinde. Auf diese Weise wird erreicht, dass die Gebinde durch die Greifelemente 22 formschlüssig gegriffen werden und damit ein sehr präziser Drehvorgang möglich ist. Es wäre auch möglich, dass die beiden Platten zueinander in einer Grundstellung einen Abstand aufweisen, der größer ist als die Länge der Gebinde und dass darüber hinaus Stellelemente vorgesehen sind, welche die Platten aufeinander zubewegen und damit mit dem jeweiligen Gebinde in formschlüssigen Kontakt bringen. Auch könnten die Platten 22 in einer Weise schräg gestellt sein, dass ein Einführen der Gebinde zwischen zwei Platten 22 erleichtert wird.

Das Bezugszeichen 35 bezieht sich auf eine Steuerungseinrichtung, die den Drehvorgang einzelner Gebinde steuert. Es wird dabei darauf hingewiesen, dass nicht alle Gebinde gedreht werden, sondern wie in Fig. 1 gezeigt, nur jeweils bestimmte Gebinde, um auf diese Weise ein durch die Steuereinrichtung 35 gesteuertes genaues Lagenbild zu erreichen. Auf der linken Seite in Fig. 1 ist eine Reihe aus mehreren Gebinden gezeigt, wobei die beiden linken Gebinde jeweils um 90° gedreht wurden und die drei sich rechts anschließenden Gebinde nicht verdreht wurden.

Diese Gebindegruppe G wird anschließend durch eine Verschiebeinrichtung 28 auf eine Palette 30 verschoben, wobei diese Verschiebung entgegengesetzt bezüglich der Richtung S erfolgt. Damit ist mit der erfindungsgemäßen Anlage eine variable lagenabhängige Drehung gewährleistet.

Die Geschwindigkeit der Transporteinrichtung 4 ist auf die Bewegungsgeschwindigkeit der Greifeinrichtungen 12 in der Bewegungsrichtung R angepasst bzw. angeglichen. Zum Angleichen dieser Geschwindigkeiten wird ein Drehwertgeber verwendet. Das Bezugszeichen 7 bezieht sich auf eine Lichtschranke, die stromaufwärts bezüglich der Dreheinrichtung 6 angeordnet ist und ein Einleiten des Drehvorgangs bewirkt. Genauer gesagt ist die Lichtschrankeneinheit auf dem Mattenkettenband vor der eigentlichen Dreheinrichtung 6 vorgesehen.

Das Bezugszeichen 18 bezieht sich auf eine stromabwärts bezüglich der Dreheinrichtung 6 angeordnete Vorbahn, die dazu dient, um die Geschwindigkeit des Drehvorgangs bzw. der Transporteinrichtung 4 abzubauen bzw. zu reduzieren.

Auf der Einlaufbahn 14, welche ebenfalls hinsichtlich ihrer Transportgeschwindigkeit in der Transportrichtung R regelbar ist, werden die einzelnen Gebinde 10 wieder zusammengeschoben und in Abhängigkeit von dem gewünschten Lagenbild positioniert. Dies bedeutet, dass auf der Einlaufbahn auch gezielt bestimmte Abstände zwischen einzelnen Gebinden 10 erzeugt werden können. Sobald eine bestimmte Gruppe G zusammengestellt wurde, kann sie mit der Verschiebeinrichtung 28, die auch als Reihenschiebeeinrichtung bezeichnet werden kann, in Richtung der Palette 30 geschoben werden.

Damit ist bei allen in den Figuren gezeigten Ausführungsformen der gesamte Drehvorgang, d. h. einerseits die Lagenvorbereitung mit andererseits der Reihenvorbereitung, welche insbesondere durch die Dreheinrichtung 6 erfolgt, durch die Vorbahn, entkoppelt. Damit ist es auch möglich, im Falle eines Fehlers in dem Gruppierband bzw. der Einlaufbahn 14, die Lagenvorbereitung durch die Dreheinrichtung 6 anzuhalten und den Vorgang durch das Abbauband bzw. die Vorbahn 18 zu trennen.

Fig. 2 zeigt eine weitere Ausführungsform einer erfindungsgemäßen Anlage. Bei dieser Ausführungsform sind zwei Dreheinrichtungen 6 aus Fig. 1 parallel zueinander angeordnet. Damit können jeweils zwei zueinander parallele Gruppen G an Gebinden 10 erzeugt werden, die anschließend mit der Verschiebeinrichtung 28 auf die Palette 30 geschoben werden. Es wird darauf hingewiesen, dass sich die Anlage 20 nicht in einer Anordnung zweier Drehvorrichtungen 6 parallel zueinander erschöpft, sondern auch hier eine Steuereinrichtung 35 bewirkt, dass die beiden Gruppen G hinsichtlich ihres jeweiligen Lagenbildes aufeinander angepasst werden. In Fig. 2 sind zwar zwei identisch gebildete Gruppen G gezeigt, in der Praxis wird sich jedoch oftmals die untere Gruppe G von der oberen Gruppe G hinsichtlich der Anordnung der einzelnen Gebinde unterscheiden. Damit können durch die Steuereinrichtung 35 auch zwei unterschiedliche ausgebildete Gruppen G erzeugt werden. Daher sind auch die beiden Dreheinrichtungen 6 voneinander unabhängig steuerbar. Zwischen den beiden Einlaufbahnen 14 ist bevorzugt noch eine Überschubplatte 19 vorgesehen, welche ein Überschieben der oberen Gruppe G ermöglicht.

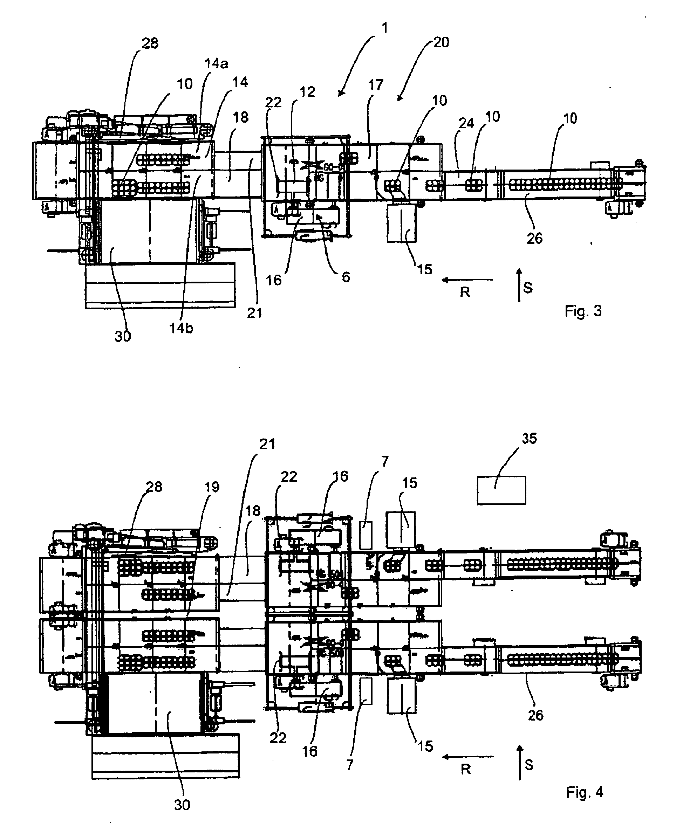

Fig. 3 zeigt eine weitere Ausführungsform einer erfindungsgemäßen Anlage 20. Bei Dieser Ausführungsform werden die Gebinde 10 wiederum nur einreihig zugeführt und, wie oben beschrieben, über ein Stoppband 26 und ein Trennband 24 voneinander getrennt. Bei der in Fig. 3 gezeigten Ausführungsform ist jedoch ein Querverschieber 15 vorgesehen, der eine vorgegebene Anzahl der Gebinde 10 in der Richtung S nach oben schiebt. So ist es beispielsweise möglich, dass jedes zweite Gebinde 10 nach oben verschoben wird. Die Dreheinrichtung 6 ist hier nur in der unteren Reihe, die sich an das Stoppband 26 anschließt, vorgesehen. In der oberen Reihe ist keine Dreheinrichtung vorgesehen, sodass die dorthin verschobenen Gebinde unverdreht bleiben. Dabei ist es möglich, dass diese beiden Reihen getrennt voneinander angetrieben bzw. transportiert werden.

Bei der in Fig. 3 gezeigten Ausführungsform werden auf der Einlaufbahn 14 jeweils zwei Gruppen G erzeugt, wobei die jeweils obere Gruppe nur unverdrehte Gebinde enthält. Die Steuereinrichtung 35 bewirkt hier, dass auch diese beiden in Fig. 3 gezeigten Gruppen aufeinander angepasst werden. Es wird darauf hingewiesen, dass das Einlaufband 14 auch getrennt in zwei Teilbänder 14a und 14b aufgeteilt sein kann, wobei diese Teilbänder hinsichtlich ihrer Transportgeschwindigkeit unterschiedlich steuerbar sind. Auch kann hier neben der Vorbahn 18 eine weitere Vorbahn 21 vorgesehen sein, welche zum Transport der ungedrehten Gebindegruppen dient. Damit ist es insgesamt möglich, lagebildabhängig die Zusammenstellung der Gebinde auf der Einlaufbahn 14 beliebig zu regulieren. Die Verschiebeeinrichtung 28 schiebt jeweils zwei Gruppen G, wobei eine Gruppe nur unverdrehte Gebinde enthält, in der Richtung der Palette 30.

Fig. 4 zeigt eine weitere Ausführungsform einer erfindungsgemäßen Anlage 20. Diese Anlage 20 enthält zwei Module entsprechend Fig. 3, wobei jeweils aus Platzgründen die einzelnen Dreheinrichtungen 6 außen angeordnet sind und die beiden hierzu innen verlaufenden Bahnen jeweils die unverdrehten Gebinde verschieben. Bei dieser Ausführungsform werden durch die Verschiebeinrichtung 28 insgesamt 4 parallele Gruppen G in Richtung der Palette 30 verschoben. Auch bei dieser Ausführungsform ist wiederum eine Überschubplatte 19 vorgesehen, über welche hinweg die Gebinde in Richtung der Palette 30 geschoben werden. Bei der in Fig. 4 gezeigten Ausführungsform wäre es auch möglich, anstelle der gezeigten zwei Stoppbänder 26 vier derartige Stoppbänder vorzusehen, wobei auf diese Weise die Arbeitsgeschwindigkeit der Anlage noch erhöht werden könnte, da in diesem Fall die Gebinde vierspurig zugeführt werden. Falls vier derartige Stoppbänder 26 vorgesehen sind, wäre es auch möglich, auf den Querverschieber 15 zu verzichten. Ähnlich könnte man auch bei der in Fig. 3 gezeigten Ausführungsform die Gebinde zweireihig zuführen und entsprechend auf den Querverschieber 15 verzichten

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Transportieren von Gebinden (10) mit einer ersten Transporteinrichtung (4), welche die Gebinde (10) in einer vorgegebenen Transportrichtung (R) fördert, einer Dreheinrichtung (6), welche wenigstens einige der Gebinde (10) bezüglich einer vorgegebenen Drehachse um einen vorgegebenen Drehwinkel dreht, wobei die Dreheinrichtung (6) wenigstens eine Greifeinrichtung (12) aufweist, welche die Gebinde (10) für den Drehvorgang gzeift, wobei die Greifeinrichtung in der Transportrichtung (R) bewegbar ist, wobei die Transportgeschwindigkeit der ersten Transporteinrichtung (4) mit einer Bewegungsgeschwindigkeit der Greifeinrichtung (12) synchronisiert ist und die Greifeinrichtung wenigstens zeitweise in einer zu einer Ebene der Transporteinrichtung (4) senkrecht stehenden Richtung bewegbar ist, wobei die Dreheinrichtung (6) eine genau definierte Drehung durchführt **dadurch gekennzeichnet, dass** während des Durchführens dieser Drehbewegung die Dreheinrichtung zumindest auch in Transportrichtung bewegt wird, wobei insbesondere diese Bewegung in der Transportrichtung wenigstens zeitweise mit der Transportgeschwindigkeit der Transporteinrichtung (4) in der Transportrichtung (R) synchronisiert ist.

2. Vorrichtung nach Anspruch 1, **dadurch gekennzeichnet, dass** eine Vielzahl von Greifeinrichtungen (12) vorgesehen ist.

3. Vorrichtung nach wenigstens einem der vorangegangenen Ansprüche, **dadurch gekennzeichnet, dass** die Greifeinrichtung (12) wenigstens zeitweise in einer zu der Transportrichtung (R) senkrecht stehenden Richtung bewegt wird.

4. vorrichtung nach wenigstens einem der vorangegangenen Ansprüche, **dadurch gekennzeichnet, dass** die Greifeinrichtung (12) drehbar um eine vorgegebene Achse angeordnet ist.

5. vorrichtung nach wenigstens einem der vorangegangenen Ansprüche, **dadurch gekennzeichnet, dass** die Greifeinrichtung (12) derart gestaltet ist, dass sie das Gebinde (10) im wesentlichen formschlüssig greift.

6. Vorrichtung nach wenigstens einem der vorangegangenen Ansprüche, **dadurch gekennzeichnet, dass** in der Transportrichtung vor der Dreheinrichtung (6) eine Sensoreinrichtung (7) angeordnet ist, welche das Vorhandensein eines Gebindes (10) erkennt.

7. Anlage (20) zum Transportieren von Gebinden (10) mit einer Vorrichtung zum Transportieren von Gebinden nach wenigstens einem der vorangegangenen Ansprüche, **dadurch gekennzeichnet, dass** in der Transportrichtung (R) vor der Dreheinrichtung (6) ein Transportband (26) vorgesehen ist, welches vorgegebene Abstände zwischen einzelnen Gebinden (10) erzeugt.

8. Anlage (20) nach Anspruch 7, **dadurch gekennzeichnet, dass** die Anlage eine Verschiebeeinrichtung (28) aufweist, welche eine Vielzahl von Gebinden (10) in einer von der Transportrichtung (R) abweichenden Richtung schiebt.

9. Anlage (20) nach wenigstens einem der vorangegangenen Ansprüche, **dadurch gekennzeichnet, dass** in der Transportrichtung (R) nach der ersten Transporteinrichtung (4) eine weitere Transporteinrichtung (14) vorgesehen ist, welche die Gebinde (10) nach der ersten Transporteinrichtung (4) fördert.

10. Anlage (20) nach wenigstens einem der vorangegangenen Ansprüche 7 - 9, **dadurch gekennzeichnet, dass** zwischen der ersten Transporteinrichtung (4) und der weiteren Transporteinrichtung (14) eine verzögerungseinrichtung (18) vorgesehen ist, welche die Transportgeschwindigkeit der Gebinde (10) verzögert.

11. Anlage (20) nach wenigstens einem der vorangegangenen Ansprüche 7 - 10, **dadurch gekennzeichnet, dass** in der Transportrichtung vor der Dreheinrichtung (6) ein Querverschieber (15) vorgesehen ist, welche einzelne Gebinde (10) in einer von der Transportrichtung (R) abweichenden Richtung verschiebt.

12. Anlage (20) nach wenigstens einem der vorangegangenen Ansprüche 7 - 11, **dadurch gekennzeichnet, dass** die Transporteinrichtung (4) derart gestaltet ist, dass in einer zu der Transportrichtung (R) senkrecht stehenden Richtung (S) zwei Gebinde (10) nebeneinander transportiert werden können.

13. Anlage (20) nach wenigstens einem der vorangegangenen Ansprüche (7- 11); **dadurch gekennzeichnet, dass** die Anlage (20) wenigstens zwei in einer zu der Transportrichtung (R) senkrecht stehenden Richtung (S) nebeneinander angeordnete Dreheinrichtungen (4) aufweist.

14. Verfahren zum Transportieren von Gebinden (10), wobei die Gebinde (10) mittels einer ersten Transporteinrichtung (4) in einer vorgegebenen Transportrichtung (R) transportiert werden und mittels einer Dreheinrichtung (6) um eine vorgegebene Drehachse gedreht werden, wobei die Gebinde (10) während des Transports mit der ersten Transporteinrichtung (4) gedreht werden, wobei die Gebinde (10) zur Durchführung des Drehvorgangs mit sich bewegenden Greifeinrichtungen (12) erfasst werden, wobei die Bewegung dieser Greifeinrichtungen (12) mit der Bewegung der Transporteinrichtung (4) synchronisiert ist und die Greifeinrichtungen (12) wenigstens zeitweise in einer zu der Ebene der Transporteinrichtung (4) senkrecht stehenden Richtung bewegt werden und wobei die Dreheinrichtung (6) eine genau definierte Drehung durchführt **dadurch gekennzeichnet, dass** während des Durchführens dieser Drehbewegung die Dreheinrichtung zumindest auch in Transportrichtung bewegt wird, wobei insbesondere diese Bewegung in der Transportrichtung wenigstens zeitweise mit der Transportgeschwindigkeit der Transporteinrichtung (4) in der Transportrichtung (R) synchronisiert wird.

15. Verfahren nach Anspruch 14, **dadurch gekennzeichnet, dass** die Drehachse, um welche die Gebinde (10) gedreht werden, senkrecht zu der Transporteinrichtung (4) und innerhalb der Gebinde (10) verläuft.

16. Verfahren nach wenigstens einem der vorangegangenen Ansprüche 14 - 15, **dadurch gekennzeichnet, dass** die Gebinde (10) mit der Greifeinrichtung (12) im wesentlichen formschlüssig gegriffen werden.

## Claims

1. Apparatus (1) for conveying packages (10), comprising a first conveying device (4) which conveys the packages (10) in a predefined conveying direction (R), a rotating device (6) which rotates at least some of the packages (10) by a predefined angle of rotation with respect to a predefined axis of rotation, wherein the rotating device (6) comprises at least one gripping device (12) which grips the packages (10) for the rotation process, wherein the gripping device can move in the conveying direction (R), wherein the conveying speed of the first conveying device (4) is synchronised with a movement speed of the gripping device (12) and the gripping device is movable at least in times in a direction, which is perpendicular with respect to a plane of the conveying device, wherein the rotating device (6) carries out a precisely defined rotation, **characterised in that** during the performance of this rotation movement the rotation device (6) is at least also moved in the transport direction , wherein especially this movement in the transport direction is at least in times synchronised with the conveying speed of the conveying device (4) in the conveying direction.

2. Apparatus according to claim 1, **characterised in that** a plurality of gripping devices (12) are provided.

3. Apparatus according to at least one of the preceding claims, **characterised in that** the gripping device (12) is moved at least at times in a direction perpendicular to the conveying direction (R).

4. Apparatus according to at least one of the preceding claims, **characterised in that** the gripping device (12) is arranged such that it can rotate about a predefined axis.

5. Apparatus according to at least one of the preceding claims, **characterised in that** the gripping device (12) is configured in such a way that it grips the package (10) essentially with a form fit.

6. Apparatus according to at least one of the preceding claims, **characterised in that** arranged upstream of the rotating device (6) in the conveying direction is a sensor device (7) which detects the presence of a package (10).

7. Installation (20) for conveying packages (10), comprising an apparatus for conveying packages according to at least one of the preceding claims, **characterised in that** provided upstream of the rotating device (6) in the conveying direction (R) is a conveyor belt (26) which generates predefined distances between individual packages (10).

8. Installation (20) according to claim 7, **characterised in that** the installation comprises a displacement device (28) which pushes a plurality of packages (10) in a direction differing from the conveying direction (R).

9. Installation (20) according to at least one of the preceding claims, **characterised in that** provided downstream of the first conveying device (4) in the conveying direction (R) is a further conveying device (14) which conveys the packages (10) downstream of the first conveying device (4).

10. Installation (20) according to at least one of the preceding claims 7 to 9, **characterised in that** provided between the first conveying device (4) and the further conveying device (14) is a slowing device (18) which slows the conveying speed of the packages (10).

11. Installation (20) according to at least one of the preceding claims 7 to 10, **characterised in that** provided upstream of the rotating device (6) in the conveying direction is a transverse displacer (15) which displaces individual packages (10) in a direction differing from the conveying direction (R).

12. Installation (20) according to at least one of the preceding claims 7 to 11, **characterised in that** the conveying device (4) is configured in such a way that two packages (10) can be conveyed next to one another in a direction (S) perpendicular to the conveying direction (R).

13. Installation (20) according to at least one of the preceding claims (7 to 11), **characterised in that** the installation (20) has at least two rotating devices (4) arranged next to one another in a direction (S) perpendicular to the conveying direction (R).

14. Method for conveying packages (10), wherein the packages (10) are conveyed in a predefined conveying direction (R) by means of a first conveying device (4) and are rotated about a predefined axis of rotation by means of a rotating device (6), wherein the packages (10) are rotated during conveying by the first conveying device (4), wherein the packages (10) are gripped by means of moving gripping devices (12) in order to carry out the rotation process, wherein the movement of these gripping devices (12) is synchronised with the movement of the conveying device (4), wherein the gripping devices are at least in times moved in a direction, which is perpendicular with respect to a plane of the conveying (4) device and wherein the rotating device (6) performs an exactly defined rotation, **characterised in that** during the performance of the rotation movement the rotating device (6) is moved at least also in the conveying direction, wherein especially this movement in the conveying direction is at least in times synchronised with the conveying speed of the conveying device (4) in the conveying direction (R).

15. Method according to claim 14, **characterised in that** the axis of rotation, about which the packages (10) are rotated, runs perpendicular to the conveying device (4) and within the packages (10).

16. Method according to at least one of the preceding claims 14 to 15, **characterised in that** the packages (10) are gripped by the gripping device (12) essentially with a form fit.

## Revendications

1. Système (1) pour le transport de fûts (10), avec un premier dispositif de transport (4) qui convoie les fûts (10) dans une direction de transport (R) définie, un dispositif de rotation (6) qui tourné au moins quelques-uns des fûts (10) suivant un angle de rotation défini par rapport à un axe de rotation défini, le dispositif de rotation (6) comportant au moins un dispositif de préhension (12) qui saisit les fûts (10) pour le processus de rotation, le dispositif de préhension étant mobile dans la direction de transport (R), la vitesse de transport du premier dispositif de transport (4) étant synchronisée avec une vitesse de déplacement du dispositif de préhension (12), et ledit dispositif de préhension étant déplacé au moins temporairement dans une direction perpendiculaire au plan du dispositif de transport (4), le dispositif de rotation (6) exécutant une rotation précisément définie, **caractérisé en ce que** pendant l'exécution de cette rotation, le dispositif de rotation lui aussi est au moins déplacé dans la direction de transport, ledit déplacement dans la direction de transport étant notamment synchronisé au moins temporairement avec la vitesse de transport du dispositif de transport (4) dans la direction de transport (R).

2. Système selon la revendication 1, **caractérisé en ce qu'**il est prévu une pluralité de dispositifs de préhension (12).

3. Système selon au moins une des revendications précédentes, **caractérisé en ce que** le dispositif de préhension (12) est déplacé au moins temporairement dans une direction perpendiculaire à la direction de transport (R).

4. Système selon au moins une des revendications précédentes, **caractérisé en ce que** le dispositif de préhension (12) est disposé de manière à être rotatif autour d'un axe défini.

5. Système selon au moins une des revendications précédentes, **caractérisé en ce que** le dispositif de préhension (12) est réalisé de manière à saisir le fût (10) essentiellement par correspondance de forme.

6. Système selon au moins une des revendications précédentes, **caractérisé en ce qu'**un dispositif de détection (7) est présent en amont du dispositif de rotation (6) dans la direction de transport, lequel détecte la présence d'un fût (10).

7. Installation (20) de transport de fûts (10) avec un système de transport de fûts selon au moins une des revendications précédentes, **caractérisée en ce qu'**une bande de transport (26) est prévue en amont du dispositif de rotation (6) dans la direction de transport (R), laquelle génère des espacements définis entre les différents fûts (10).

8. Installation (20) selon la revendication 7, **caractérisée en ce que** ladite installation comporte un dispositif de déplacement (28) qui déplace une pluralité de fûts (10) dans une direction différente de la direction de transport (R).

9. Installation (20) selon au moins une des revendications précédentes, **caractérisée en ce qu'**un autre dispositif de transport (14) est prévu en aval du premier dispositif de transport (4) dans la direction de transport (R), lequel convoie les fûts (10) en aval du premier dispositif de transport (4).

10. Installation (20) selon au moins une des revendications précédentes 7 à 9, **caractérisée en ce qu'**un dispositif ralentisseur (18) est prévu entre le premier dispositif de transport (4) et l'autre dispositif de transport (14), lequel ralentit la vitesse de transport des fûts (10).

11. Installation (20) selon au moins une des revendications précédentes 7 à 10, **caractérisée en ce qu'**un dispositif de déplacement transversal (15) est prévu en amont du dispositif de rotation (6) dans la direction de transport, lequel déplace différents fûts (10) dans une direction différente de la direction de transport (R).

12. Installation (20) selon au moins une des revendications 7 à 11, **caractérisée en ce que** le dispositif de transport (4) est réalisé de manière à permettre le convoyage de deux fûts (10) côte à côte dans une direction (S) perpendiculaire à la direction de transport (R).

13. Installation (20) selon au moins une des revendications précédentes 7 à 11, **caractérisée en ce que** ladite installation (20) comporte au moins deux dispositifs de rotation (4) côte à côte dans une direction (S) perpendiculaire à la direction de transport (R).

14. Procédé de transport de fûts (10), où les fûts (10) sont convoyés dans une direction de transport (R) définie au moyen d'un premier dispositif de transport (4) et tournés autour d'un axe de rotation défini au moyen d'un dispositif de rotation (6), les fûts (10) étant tournés par le premier dispositif de transport (4) pendant le transport, les fûts (10) étant saisis par des dispositifs de préhension (12) mobiles pour l'exécution du processus de rotation, le mouvement desdits dispositifs de préhension (12) étant synchronisé avec le déplacement du dispositif de transport (4), et lesdits dispositifs de préhension (12) étant déplacés au moins temporairement dans une direction perpendiculaire au plan du dispositif de transport (4), le dispositif de rotation (6) exécutant une rotation précisément définie, **caractérisé en ce que** pendant l'exécution de cette rotation, le dispositif de rotation lui aussi est au moins déplacé dans la direction de transport, ledit déplacement dans la direction de transport étant notamment synchronisé au moins temporairement avec la vitesse de transport du dispositif de transport (4) dans la direction de transport (R).

15. Procédé selon la revendication 14, **caractérisé en ce que** l'axe de rotation, autour duquel les fûts (10) sont tournés, s'étend perpendiculairement au dispositif de transport (4) et à l'intérieur des fûts (10).

16. Procédé selon au moins une des revendications précédentes 14 et 15, **caractérisé en ce que** les fûts (10) sont saisis essentiellement par correspondance de forme par le dispositif de préhension (12).
